# EUROPEAN PATENT APPLICATION

(11) **EP 1 781 000 A1**
(43) Date of publication of application: **02.05.2007**
(21) Application number: 06022232.0
(22) Date of filing: 24.10.2006
(51) Int. Cl.: H04M 1/725, H04M 1/247

(54) **Method for analyzing information and executing function corresponding to analyzed information in portable terminal**

(30) Priority: 27.10.2005 KR 20050101780
(71) Applicant: Samsung Electronics Co., Ltd., Suwon-si, Gyeonggi-Do (KR)
(72) Inventor: Won, Jong-Sang, Yeongtong-gu Suwon-si Gyeonggi-do (KR); Choe, Gwang-Woo, Yeongtong-gu Suwon-si Gyeonggi-do (KR); Cha, Jung-Sook, Yeongtong-gu Suwon-si Gyeonggi-do (KR); Jeong, Heung-Jae, Yeongtong-gu Suwon-si Gyeonggi-do (KR)
(74) Representative: Lang, Johannes

(57) **Abstract**

A method for analyzing diverse information included in a text and performing a function corresponding to the analyzed information in a portable terminal is disclosed. A user can easily perform a function such as originating a call and a message preparing by selecting the information included in the text without necessitating the user to manipulate several keys.

## Description

### BACKGROUND OF THE INVENTION

### Field of the Invention:

The present invention relates to a portable terminal. More particularly, the present invention relates to a method for analyzing information and executing a function corresponding to the analyzed information that is displayed in a text view mode in a portable terminal.

### Description of the Related Art:

With the implementation of various functions in a portable terminal, a user can use his/her portable terminal effectively according to his/her characteristics by storing personal information and diverse types of data. Particularly, in a received text message among various kinds of data, in order to store diverse information, such as phone numbers, email addresses, URL, and others, included in the text message received from an external source and to perform functions corresponding to the information, a mode of the portable terminal should be changed according to the information after the contents of the message is displayed.
Conventionally, a call can be originated with respect to a phone number included in a received text message. However, in the case of a plurality of phone numbers included in the received text message, a function for a user to selectively originate a call to a desired phone number has not yet been implemented. Accordingly, the user experiences inconvenience in performing functions corresponding to diverse information included in a specific text message, and the like.

### SUMMARY OF THE INVENTION

Accordingly, the present invention has been designed to solve the above and other problems, and an object of exemplary embodiments of the present invention is to provide a method for analyzing information input from a user and information included in a sentence and executing a function corresponding to the analyzed information in a portable terminal.

In order to accomplish the above object, a method is provided for analyzing information and executing a function corresponding to the analyzed information in a portable terminal. The method comprises displaying at least one piece of information, receiving a selection of any one of the displayed information, analyzing the selected information, changing a menu of a corresponding function according to the result of analyzing the selected information, and executing the corresponding function of the selected information according to an input of the changed menu.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating the construction of a portable terminal according to an exemplary embodiment of the present invention.
FIG. 2 is a flowchart illustrating a process of analyzing information and executing a function corresponding to the analyzed information according to an exemplary embodiment of the present invention;
FIGs. 3A through 3E are exemplary views illustrating displayed screens according to an exemplary embodiment of the present invention;
FIG. 4 is a flowchart illustrating a process of analyzing information and executing a function corresponding to the analyzed information according to an exemplary embodiment of the present invention; and
FIGs. 5A through 5E are exemplary views illustrating displayed screens according to an exemplary embodiment of the present invention.
Throughout the drawings, like reference numerals will be understood to refer to like parts, components and structures.

### DETAILED DESCRIPTION OF EXEMPALRY EMBODIMENTS

Exemplary embodiments of the present invention will be described in detail hereinafter with reference to the accompanying drawings. Additionally, a detailed description of known functions and configurations incorporated herein will be omitted for clarity and conciseness.

In exemplary embodiments of the present invention, data including characters, numerals, and symbols, such as a message, a memo pad and a phone book is defined as a text, while phone numbers, emails and uniform resource locaters (URL's) included in the text are defined as information.

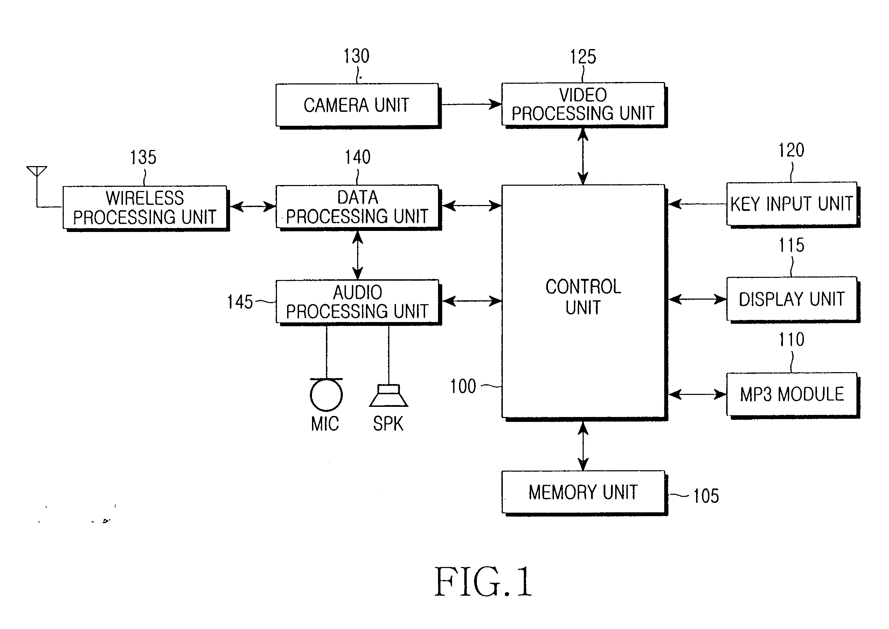

FIG. 1 is a block diagram illustrating the construction of a portable terminal according to an exemplary embodiment of the present invention.

Referring to FIG.1, a control unit 100 controls the functions of the portable terminal. The control unit 100 controls a display unit 115 to display various information according to a menu, required by a user. Particularly, the control unit 100 performs a function of classifying phone numbers, emails, and an uniform resource locater (URL) among diverse information displayed on the display unit 115 by using a predetermined analysis method. The control unit 100 also creates a menu for performing a function corresponding to the information selected by the user according to the classified information, and controls the display unit 1 15 to display a list. Additionally, the control unit 100 receives either the created menu input or the displayed list, and controls the portable terminal to perform a function corresponding to the received menu input or the displayed list.

A memory unit 105 stores a program to be executed by the control unit 100 or temporarily stores data processed by the program. The memory unit 105 also stores various bell sounds, MP3, and moving images, which may be output from the portable terminal, and stores various phone books, messages, and others. Such a memory unit 105 preferably comprises a Read Only Memory (ROM) for storing an operation program, an electrically erasable programmable ROM (EEPROM), and a Random Access Memory (RAM). The memory unit 105 according to an exemplary embodiment of the present invention stores data received from the user or data downloaded from an external source. In a received message view mode or a phone book view mode, the memory unit 105 also stores the pre-stored received messages, texts stored in the phone book, and information included in the text.

An MPEG-audio layer-3 (MP3) module 110 reproduces MP3-coded audio files stored in the memory unit 105, and sends reproduced MP3 audio data to the control unit 100. The audio data input to the control unit 100 is output to a speaker or an earphone through a data processing unit 140 and an audio processing unit 145 to provide high quality music to the user.

The display unit 115 displays a present state, a processing state and an operation state according to a key input from a key input unit 120. The display unit 115 additionally displays video data output from a video processing unit 125, and a user interface for executing a photographing function. Here, the display unit 115 may be a Liquid Crystal Display (LCD). In this case, the display unit 115 may comprise a CD controller (not shown), a memory unit (not shown) in which the video data can be stored, and a LCD display device. If the LCD is implemented for using a touch screen type, the key input unit 120 and the LCD may operate as an input unit. The display unit 115 comprises the display unit for outputting the video data. The display unit 115 according to an exemplary embodiment of the present invention displays the pre-stored text according to the selection of the user, or a message received from the external source. The display unit 115 may display information included in the displayed text according to the result of analysis by the control unit 100, a list of executable functions according to the information, or shortcut menu information. Additionally, the display unit 115 displays an execution process and results according to the information being displayed.

The key input unit 120 comprises keys for inputting numeral and text information, and function keys for setting various functions. The key input unit 120 according to an exemplary embodiment of the present invention is used to receive a user's selection of the information to be included in the displayed text and input signals for performing functions corresponding to the respective selected information.

A camera 130 comprises a camera sensor for taking a picture of the video data and converting the taken optical signal into an electrical signal. It is assumed that the camera sensor is a Charge Coupled Device (CCD) sensor. The video processing unit 125 produces screen data for representing the video signal. The video processing unit 125 transmits the video signal received under the control of the control unit 100 corresponding to the standard of the display unit 115, and performs a compression and decompression of the video data. The camera 130 and the video processing unit 125 may be fabricated into a single camera unit.

A wireless processing unit 135 communicates with another portable terminal. The wireless processing unit 135 comprises a RF transmitter (not shown) for up-converting and amplifying the frequency of a transmitted signal, and a RF receiver (not shown) for low-noise-amplifying the received signal and downconverting the frequency. The wireless processing unit 135 receives a text message including a phone number, an email address, et al., from the external source, and transmits the text message including the information from the user to a predetermined place.

A data processing unit 140, such as a MODEM, comprises a transmitter for encoding and modulating the transmitted signal, and a receiver for demodulating and decoding the received signal.

An audio processing unit 145 may constitute a codec. The codec comprises a data codec for processing packet data, and an audio codec for processing an audio signal. The audio processing unit 145 converts a digital audio signal received from the data processing unit 140 into an analog signal via the audio codec to reproduce the converted analog signal, or converts an analog audio signal transmitted from a microphone into a digital audio signal via the audio codec to transmit the converted digital audio signal to the data processing unit 140. The codec may be separately provided or included in the control unit 100. According to an exemplary embodiment of the present invention, the audio processing unit 145 outputs an alarm sound, informing that the text message has been received, through the speaker connected to the audio processing unit 145 when the character message is received from the external source. Additionally, in an exemplary embodiment of the present invention, if the user selects the phone number among information included in the received message or the phone book, the audio processing unit 145 receives and transmits the audio data through the speaker and the microphone when a call is originated to the phone number.

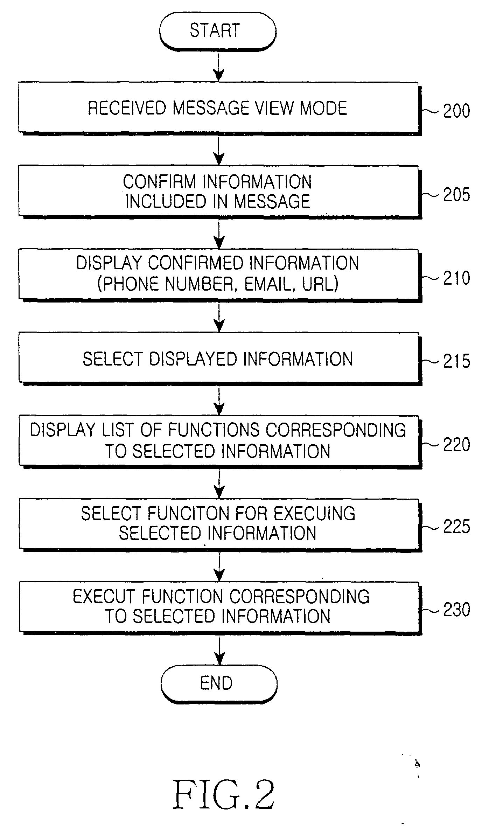

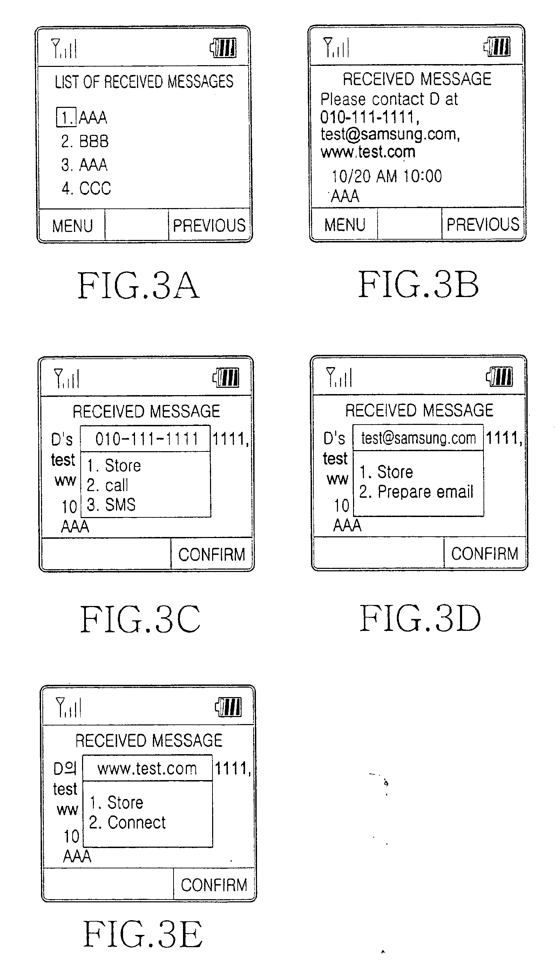

FIG. 2 is a flowchart illustrating a process of analyzing information and executing a function corresponding to the analyzed information according to an exemplary embodiment of the present invention, and FIGs. 3A through 3E are exemplary views illustrating displayed screens according to an exemplary embodiment of the present invention.

Referring to FIGs. 2 and 3A through 3E, the control unit 100 receives a key input for executing a message menu among various functions of a portable terminal. Then, the control unit 100 displays a list of received messages received from an external source and pre-stored according to the key input, as shown in FIG 3A, and selects one of the displayed messages. The control unit 100 executes a received message view mode for displaying contents included in the selected received message in step 200.

The control unit 100 analyzes information included in the message contents according to the received view mode at step 205. This information may comprise a phone number, an email address, a URL, and others. According to an analysis of the information included in the received message, the displayed information is preferably recognized as a phone number if more than a predetermined number of numerals or hyphens exist, or if any predetermined local area number such as 02, 032, 054 and others, or any front numbers for portable terminals such as 010, 011, 016 and others, exist. Additionally, if an "at" sign or period exists in the message, it is preferably recognized as an email address. The control unit 100 displays information included in the received message on the display unit 115 as shown in FIG 3B, where the information is differentiated from the text by size and/or color in step 210.

The control unit 100 selects one of the displayed information, which are differentiated from the text, through an input of a direction key in step 215. Then, the control unit 100 displays a list of executable functions corresponding to the information selected by the user in step 220. For example, if the control unit 100 determines that the phone number information is selected among the displayed texts as shown in FIG. 3B, it displays a list of executable functions according to the phone number information on the screen as shown in FIG. 3C. The list of functions displayed according to the phone number information may comprise storing of the phone number, originating a call to the phone number, and sending a text message to the phone number. If the control unit 100 determines that the email address information of the text displayed in step 210 is selected, it displays a list of menus for storing the email address according to the email address information and preparing an email in order to send the prepared email to the email address on the screen as shown in FIG. 3D. Additionally, if the control unit 100 determines that the URL among the texts displayed in step 210 is selected, it displays a list of functions for storing the URL information and performing a wireless Internet connection to the URL on the screen as shown in FIG. 3E.

The control unit 100 receives a selection of a function to be executed from the list of functions displayed according to the selected information in step 225. Then, the control unit 100 executes the selected function in step 230.

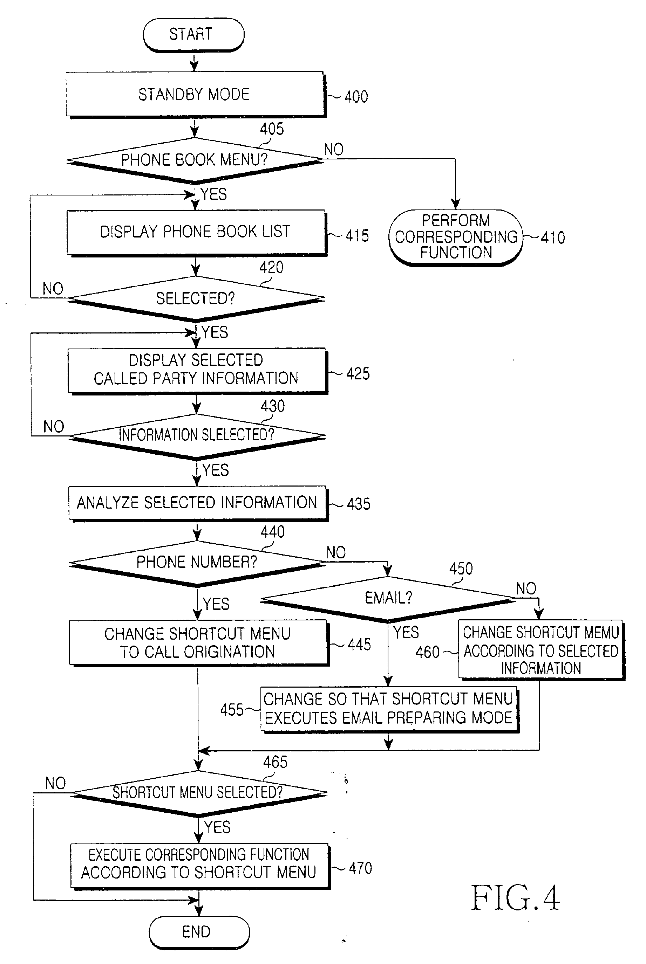

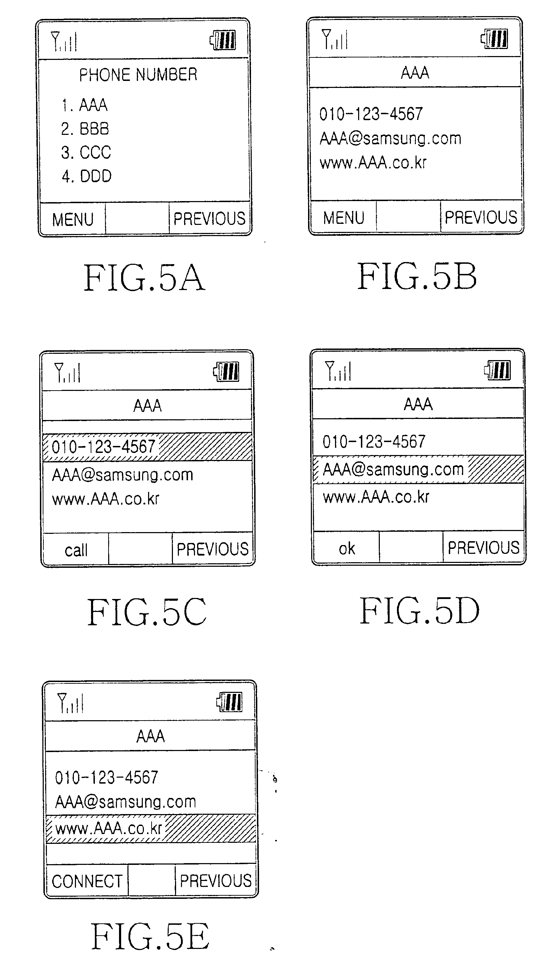

FIG. 4 is a flowchart illustrating a process of analyzing information and executing a function corresponding to the analyzed information according to an exemplary embodiment of the present invention, and FIGs. 5A through 5E are exemplary views illustrating displayed screens according to an exemplary embodiment of the present invention.

Referring to FIGs 4 and 5A through 5E, when the control unit 100 detects a key input signal in a standby state in step 400, it determines whether the input key signal is a signal for executing a phone book menu in step 405. As a result of the determination, if the input signal is not the signal for executing the phone book, it performs the function corresponding to the input key signal in step 410. By contrast, if the input key signal is the signal for executing the phone book, it displays the pre-stored phone book list on the screen as shown in FIG. 5A in step 415.

The control unit 100 determines whether a confirmation key is received to select one called party from the displayed phone book list using the direction key in step 420. As a result of determination, if one previously called party is selected from the phone book list, the selected pre-stored called party information is displayed on the screen as shown in FIG. 5B in step 425. In step 430, the control unit 100 determines whether the confirmation key is received to select one of the displayed information in step 425. If one of the information is selected the control unit 100 analyzes a type of the selected information by using the analysis method as shown in FIG. 2 in step 435.

According to the analysis result, the control unit 100 confirms whether the selected information is a phone number in step 440. If the selected information is a phone number, the control unit 100 changes the shortcut menu to the menu for originating a call to the phone number as shown at the left lower end of the screen as shown in FIG. 5C in step 445. On the other hand, if the selected information is not a phone number, the control unit 100 determines whether the selected information is an email address.

If the selected information is an email address as a result of determination, the control unit 100 changes the shortcut menu to a menu for operating in an input mode for receiving an input of the contents of the email to be sent to the email address in step 455. If the selected information is not an email address, the control unit 100 changes the shortcut menu according to the selected information in step 460. That is, if the selected information is a URL, the control unit changes the shortcut menu to a menu for performing a wireless Internet connection to the URL, for example, as shown in FIG. 5E.

The control unit 100 determines whether the changed shortcut menu is selected in step 465. The control unit performs the function corresponding to the shortcut menu according to the result of determination in step 470.
As described above, although the construction and operation of the present invention has been shown and described with reference to certain exemplary embodiments thereof, it will be understood by those skilled in the art that various changes in form and details may be made therein without departing from the spirit and scope of the present invention as defined by the appended claims. For instance, in an exemplary embodiment of the present invention, information included in a text message and a text of a phone book is displayed in distinction from the text, and thus the function corresponding to the information selected by a user is performed. However, the information included in the text may be extracted and displayed in a separate window to facilitate the selection of the information. Also, although in an exemplary embodiment of the present invention, information included in the received message and the phone book is exemplified, it is also possible to perform the function by analyzing information included in data that comprises the text in addition to the received message and the phone book. Therefore, the scope of the present invention is not limited to the exemplary embodiments, but must be defined by the appended claims or the equivalence thereof.

## Claims

1. A method for analyzing information and executing a function corresponding to the analyzed information in a portable terminal, the method comprising:
displaying at least one piece of information;
receiving a selection of any one of the displayed pieces of information;
analyzing the selected information;
changing a menu of a corresponding function according to the result of analyzing the selected information; and
executing the corresponding function of the selected information according to an input of the changed menu.

2. The method as claimed in claim 1, wherein if the selected information is a phone number, the menu is set to originate a call, and if an input of the menu input is detected, the call is originated to the phone number.

3. The method as claimed in claim 1, wherein if the selected information is an email address, the menu is set to prepare an email, and if an input of the menu is detected, a text input mode is executed to prepare the email to be sent to the email address.

4. The method as claimed in claim 1, wherein if the selected information is a uniform resource locator (URL), the menu is set to an Internet connection, and if an input of the menu is detected, a web site corresponding to the URL is accessed.

5. A method for analyzing information and executing a function corresponding to the analyzed information in a portable terminal, the method comprising:
displaying information included in a text view mode;
receiving a selection of the information;
displaying a list of menus for executable functions according to the selected information; and
executing a function corresponding to any one selected among the displayed menus.

6. The method as claimed in claim 5, further comprising:
if the selected information is a phone number, displaying a call originating menu, a message transmitting menu and a storing menu; and
receiving a selection of any one among the displayed menus and executing a function corresponding to the selected menu.

7. The method as claimed in claim 5, further comprising:
if the selected information is an email address, displaying an email preparing menu and a storing menu; and
receiving a selection of any one among the displayed menus and performing a function corresponding to the selected menu.

8. The method as claimed in claim 5, further comprising:
if the selected information is a uniform resource locator (URL), displaying a URL Internet connecting menu and a storing menu; and
receiving a selection of any one among the displayed menus and performing a function corresponding to the selected menu.
